# FASCICULE DE BREVET EUROPEEN

(11) **EP 2 209 715 B1**
(45) Date de publication et mention de la délivrance du brevet: **01.08.2012**
(21) Numéro de dépôt: 08861630.5
(22) Date de dépôt: 29.09.2008
(51) Int. Cl.: B64D 15/16

(54) **DEGIVRAGE PIEZO-ELECTRIQUE D'UNE ENTREE D'AIR**
PIEZOELEKTRISCHE ENTEISUNG EINES LUFTEINLASSES
PIEZOELECTRIC DE-ICING OF AN AIR INLET

(30) Priorité: 22.10.2007 FR 0707380
(43) Date de publication de la demande: 28.07.2010
(73) Titulaire: Aircelle, 76700 Gonfreville L'Orcher (FR)
(72) Inventeur: LE DOCTE, Thierry, F-76620 Le Havre (FR)
(74) Mandataire: Gaillarde, Frédéric F. Ch.
(86) Numéro de dépôt international: PCT/FR2008/001353
(87) Numéro de publication internationale: WO 2009/077666

(56) Documents cités:
- EP-A- 0 384 597
- EP-A- 1 734 090
- WO-A-02/090459
- DE-A1-102004 060 675
- GB-A- 2 106 966
- US-A- 4 732 351
- US-A- 5 172 024

## Description

La présente invention concerne notamment un ensemble de lèvre d'une entrée d'air d'une nacelle de turboréacteur.

Un avion est propulsé par un ou plusieurs ensembles propulsifs comprenant chacun un turboréacteur logé dans une nacelle tubulaire. Chaque ensemble propulsif est rattaché à l'avion par un mât situé généralement sous une aile ou au niveau du fuselage.

Une nacelle présente généralement une structure comprenant une entrée d'air en amont du moteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

L'entrée d'air comprend, d'une part, une lèvre d'entrée adaptée pour permettre la captation optimale vers le turboréacteur de l'air nécessaire à l'alimentation de la soufflante et des compresseurs internes du turboréacteur, et d'autre part, une structure aval sur laquelle est rapportée la lèvre et destinée à canaliser convenablement l'air vers les aubes de la soufflante. L'ensemble est rattaché en amont d'un carter de la soufflante appartenant à la section amont de la nacelle.

En vol, selon les conditions de température et d'humidité, de la glace peut se former sur la nacelle au niveau de la surface externe de la lèvre d'entrée d'air. La présence de glace ou de givre modifie les propriétés aérodynamiques de l'entrée d'air et perturbe l'acheminement de l'air vers la soufflante.

Une solution pour dégivrer ou déglacer la surface externe consiste à éviter que de la glace ne se forme sur cette surface externe.

Ainsi, il est connu de prélever de l'air chaud au niveau du compresseur du turboréacteur et de l'amener au niveau de la lèvre d'entrée d'air afin de réchauffer les parois. Toutefois, un tel dispositif nécessite un système de conduits d'amenée d'air chaud entre le turboréacteur et l'entrée d'air, ainsi qu'un système d'évacuation de l'air chaud au niveau de la lèvre d'entrée d'air. Ceci augmente la masse de l'ensemble propulsif, ce qui n'est pas souhaitable.

Dans le brevet EP 1 495 963, on propose d'appliquer une résistance chauffante sur une paroi extérieure de la lèvre d'entrée d'air. Cette technologie oblige à rajouter une protection anti-érosion par-dessus la résistance chauffante de dégivrage.

Une telle solution présente plusieurs inconvénients. Tout d'abord, le produit anti-érosion n'est pas en adéquation avec la qualité de surface demandée pour la paroi externe de la lèvre. Ensuite, en cas de recouvrement partiel de la lèvre d'entrée d'air, celle-ci présente une discontinuité qui est néfaste à la ligne aérodynamique de l'entrée d'air. Enfin, un tel système contribue à augmenter l'épaisseur totale de la lèvre, ce qui peut entraîner une dégradation des performances d'atténuation acoustique, celles-ci étant liées à l'épaisseur de la lèvre d'entrée d'air.

On connaît également une structure pour une lèvre d'une entrée d'air d'une nacelle de turboréacteur comprenant une peau externe et une peau interne entre lesquelles est présent un élément électrique chauffant.

Un inconvénient de cette structure est que l'élément électrique chauffant doit être en permanence alimenté électriquement pour éviter que de la glace ne se forme sur la structure.

Un but de la présente invention est de fournir un ensemble de lèvre d'une entrée d'air d'une nacelle de turboréacteur présentant un dégivrage et un déglaçage efficaces sans risque d'endommager le turboréacteur, sans alourdir la masse de la nacelle, sans perturber la ligne aérodynamique ou l'atténuation acoustique et ne nécessitant pas une alimentation électrique permanente.

Une première solution, partielle, et décrite notamment dans le document EP 1 734 090 consiste à appliquer un revêtement anti-glace enduisant au moins une partie de la surface externe.

Par « surface externe », on entend la surface exposée à la formation de la glace atmosphérique.

Par « surface interne», on entend la surface exposée à la formation de la glace atmosphérique.

Le revêtement anti-glace ou encore appelé revêtement « icephobic » est destiné à empêcher la formation de la couche de glace ou pour améliorer le délestage de glace, une fois la couche de glace formée.

Ainsi, le revêtement anti-glace permet de limiter l'épaisseur de la glace qui s'accroche sur cette surface externe à une épaisseur ne dépassant pas 2 mm.

Parallèlement, le revêtement anti-glace présente des interactions faibles avec la glace si bien que l'énergie nécessaire à rompre la couche de glace formée est plus faible que celle usuellement nécessaire lorsque la glace recouvre directement la surface externe. Ainsi, l'action du vent sur l'avion en vol suffit à évacuer la couche de glace atmosphérique.

Une telle solution ne présente toutefois pas de propriétés de dégivrage permettant d'éléminer la galce formée.

Le document US 5 172 024 décrit quant à lui un système de dégivrage par mise en oeuvre d'éléments piézoélctriques mais ne possédant pas de propriétés antiglace.

L'ensemble de lèvre selon l'invention limite grandement la formation de la glace et seule une couche de faible épaisseur facilement éliminable doit parfois être enlevée. Cette couche de glace étant mince, la glace est détachée de la surface externe sous forme de petits morceaux de l'ordre de 2 mm d'épaisseur qui sont sans danger pour le turboréacteur.

L'ensemble de lèvre n'est pas alourdi par la présence du revêtement anti-glace. La ligne aérodynamique et l'atténuation acoustique de l'ensemble de lèvre ne sont pas perturbées par la présence du revêtement anti-glace puisque ce dernier suit la ligne aérodynamique.

De plus, le dégivrage s'effectue sans nécessiter une alimentation électrique permanente.

Selon d'autres caractéristiques de l'invention, selon la revendication 1 l'ensemble de lèvre comporte l'une ou plusieurs des caractéristiques suivantes :
- les moyens de dégivrage comprennent en outre des moyens d'actionnement piézo-électrique, permettant avantageusement de casser et d'évacuer la glace de façon très efficace sans alourdir de manière substantielle la nacelle de turboréacteur;
- les moyens d'actionnement piézo-électrique comportent au moins un actionneur piézo-électrique et des moyens d'alimentation électrique, permettant de casser la glace déposée en couche mince en morceaux équivalents à des grêlons de quelques millimètres de diamètre, non susceptibles d'endommager le turboréacteur, sans avoir recours à une alimentation électrique permanente;
- le revêtement anti-glace comporte également un ou plusieurs actionneurs piézo-électriques, permettant une mise en oeuvre aisée de l'ensemble de lèvre selon l'invention;
- au moins un actionneur piézo-électrique, comportant notamment un vérin et un dipôle, est en contact avec la surface interne, permettant un ajustement précis des vibrations appliquées sur une zone de la surface externe ;
- le revêtement anti-glace est choisi parmi des peintures comportant du polyuréthane, des peintures comportant du fluoropolyuréthane, des résines telles que des résines comportant du polydiméthylsiloxane ou des plastiques comportant du Téflon®, induisant une force d'accrochage avec la couche de glace atmosphérique faible ;
- l'épaisseur du revêtement anti-glace est comprise entre 20 µm et 100 µm, permettant un compromis entre la pérennité de la couche de revêtement anti-glace sur la surface externe, le poids engendré par cette couche et le coût de revient ;
- au moins une partie de l'ensemble de lèvre est réalisée dans un matériau comportant un composite ou un métal et des nanoparticules apte à rendre la surface de l'ensemble de lèvre anti-glace, à savoir empêchant ou limitant très fortement la formation de couche de glace sur cette surface.

Selon un deuxième aspect, l'invention a pour objet une nacelle de turboréacteur comprenant un ensemble de lèvre selon l'invention.

L'invention sera davantage comprise à la lecture de la description non limitative qui va suivre, faite en référence aux figures ci-annexées.
- La figure 1 est un schéma représentant un mode de réalisation d'un ensemble de lèvre selon l'invention.
- La figure 2 est un schéma représentant un autre mode de réalisation d'un ensemble de lèvre selon l'invention.

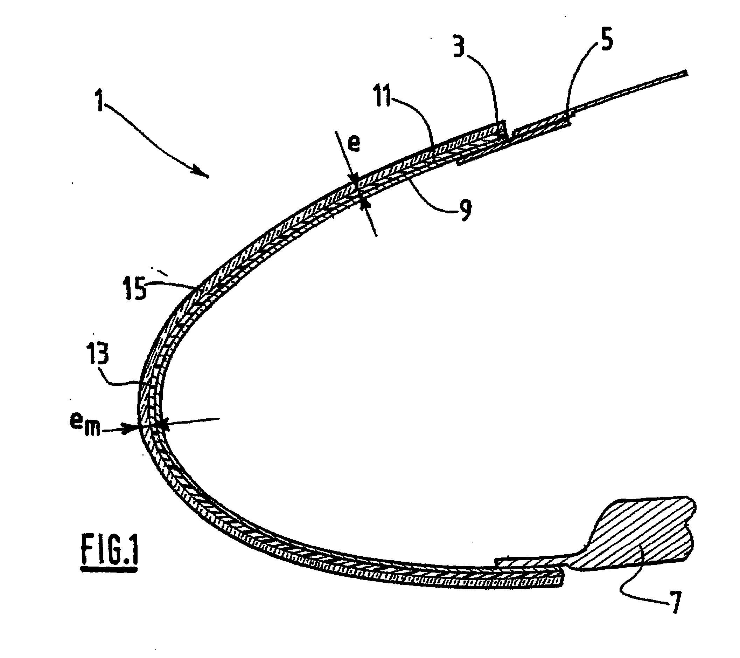

Sur la figure 1 est représenté un ensemble de lèvre 1 selon l'invention pour une nacelle de turboréacteur non représentée.

L'ensemble de lèvre 1 selon l'invention comporte une paroi 3 fixée aux parois 5 et 7 d'une structure avale de la nacelle de turboréacteur par tout moyen connu de l'homme du métier. La structure avale est destinée à canaliser convenablement l'air vers les aubes non représentées de la souflante.

La paroi 3 comprend une surface interne 9 et une surface externe 11.

L'ensemble de lèvre 1 selon l'invention comporte des moyens de dégivrage comportant un revêtement anti-glace 13 enduisant au moins une partie de la surface externe 11, notamment sur la totalité de cette surface 11, comme représenté sur la figure 1.

L'épaisseur e du revêtement anti-glace 13 est notamment inférieure 500 µm, préférentiellement comprise entre 20 µm et 100 µm, notamment entre 40 µm et 80 µm, voire entre 50 µm et 70 µm.

L'épaisseur e du revêtement anti-glace 13 est notamment uniforme sur la surface externe 11.

Une telle épaisseur permet avantageusement un compromis entre la pérennité de la couche de revêtement anti-glace 13 face aux agressions atmosphériques, le surpoids engendré par la présence de cette couche et le coût de revient de cette couche.

Comme indiqué plus haut, lorque l'avion est en vol, l'entrée d'air est parfois soumise à des températures et à une humidité telles qu'une couche de glace atmosphérique 15 se forme sur la surface externe 11.

Le revêtement anti-glace 13 permet avantageusement de réduire la force d'accrochage de la glace atmosphérique et de la surface externe 11 sans nécessiter une alimentation électrique permanente.

De ce fait, lorsque de la glace atmosphérique se forme sur la surface externe 11 de l'ensemble de lèvre selon l'invention, la glace atmosphérique s'accumule sur la surface externe 11 en une couche mince 15 dont l'épaisseur maximale eₘ n'excéde pas 2 mm.

L'ensemble de lèvre 1 selon l'invention présente l'avantage de réduire de manière significative l'épaisseur maximale eₘ de la couche de glace atmosphérique 15 ce qui permet de rompre cette couche 15 plus facilement et ainsi de mieux l'évacuer sans alourdir l'entrée d'air lorsque l'avion est en vol.

En effet, le vent provenant de la mise en marche de l'avion suffit à décoller la couche de glace atmosphérique 15 et à évacuer cette dernière sous forme de petits morceaux d'épaisseur égale à celle de la couche 15 qui ne risquent pas d'endommager le turboréacteur.

Selon un mode de réalisation, le revêtement anti-glace 13 est incorporé dans une matrice destinée à être enduite sur la surface externe 11 formant ainsi une couche de protection.

La matrice est, par exemple, de la peinture ou une résine. A titre d'exemple, on peut citer l'époxy. La couche de protection peut par ailleurs comporter d'autres composés que le revêtement anti-glace 13, tels que du carbone, du verre ou tout autre matériaux destiné à renforcer le revêtement anti-glace 13 contre l'usure ou les chocs.

Le revêtement anti-glace 13 est choisi de sorte à prévenir et/ou de limiter l'apparition de couche de glace atmosphérique sur des structures exposées.

Ainsi, à titre d'exemple, on peut citer comme revêtement anti-glace 13 des peintures telles que V-102e® (résine vinylique comportant de la poudre d'aluminum, du diisodécyle phthalate, du méthyl isobutylcétone, du toluène), V-103c® (résine vinylique comportant du noir de carbone, du diisodécyle phthalate, du méthyl isobutylcétone, du toluène) , V-766^{e}® (résine vinylique comportant du dioxide de titane et du noir de carbone, du diisodécyle phthalate, du méthyl isobutylcétone, du toluène, de l'acide ortho phosphorique), MIL-P-24441C® (résine comportant une polyamide époxy), BMS 10-60® (résine comportant du polyuréthane), Envelon® (résine à base d'un copolymère éthylène-acide acrylique), Inerta160® (Triméthylhexaméthylenediamineépoxy), InterluxBrightside® (résine comportant du polyuréthane), Kiss-Cote® (comportant du silicone, notamment du polydiméthylsiloxane), PSX-700 ® (comportant du siloxane et un polyuréthane époxy), SA-RIP-4004® (résine de polyester saturé modifié), Slip Plate #1® (résine comportant du graphite dans un mélange d'alcool minéral), Troyguard ® (suspension de polymère fluoré dans un mélange d'alcool minéral avec de l'uréthane acrylique),Troyguard/BMS 10-60® (suspension de polymère fluoré dans un mélange d'alcool minéral avec du polyuréthane), Wearlon® (comportant un copolymère méthyl silicone époxy), WC-1-ICE® (résine comportant un polyester saturé dans un fluoropolyol).

De préférence, le revêtement anti-glace 13 est choisi parmi les plastiques comportant du Téflon® ou les résines fluoropolyuréthanes.

Le revêtement anti-glace 13 préférentiels induit une force d'accrochage entre la couche de glace 15 et la surface externe 11 particulièrement faible et est donc particulièrement efficace pour limiter l'épaisseur de la couche de glace 15 et favoriser son évacuation.

Selon un mode de réalisation préférentiel, les moyens de dégivrage comportent également des moyens de vibration légers aptes à faire vibrer la surface externe 11, préférentiellement des moyens d'actionnement piézo-électrique.

L'utilisation de vibrations sur l'ensemble de lèvre 1 selon l'invention permet de rompre une couche de glace 15 formée sur la surface externe 11 et d'éliminer cette couche de glace 15. Avantageusement, les vibrations employées dans le cadre de l'invention ne sont pas suffisantes pour endommager le revêtement anti-glace 13.

Ainsi, l'utilisation conjointe d'un revêtement anti-glace 13 et des moyens de vibration permet d'optimiser l'évacuation de la glace atmosphérique.

De plus, les moyens de vibration légers n'alourdit pas de manière substantielle le poids de l'ensemble de lèvre 1 selon l'invention.

D'une façon avantageuse, l'application de vibrations sur la surface externe 11 par les moyens d'actionnement piézo-électrique casse la couche de glace 15 en des morceaux de diamètre compris entre 0,5 mm et 1 cm correspondant à de petits grêlons non susceptibles d'endommager le turboréacteur.

Ainsi, l'évacuation de la glace par l'utilisation conjointe du revêtement anti-glace 13 et des moyens d'actionnement piézo-électrique est moins dommageable pour le turboréacteur que les systèmes de dégivrage actuellement connus.

D'une manière préférée, les moyens d'actionnement piézo-électrique comporte au moins un actionneur piézo-électrique et des moyens d'alimentation électrique.

Le ou les actionneurs piézo-électriques employés dans le cadre de la présente invention ne nécessite pas de fonctionner en permanence mais au besoin.

Selon un mode de réalisation préféré représenté sur la figure 1, revêtement anti-glace 13 comporte également un ou plusieurs actionneurs piézo-électriques. Le ou les actionneurs piézo-électriques est(sont) notamment uniformément réparti(s) dans la matrice du revêtement anti-glace 13.

Le ou les actionneurs piézo-électriques sont notamment reliés à une source électrique non représentée par l'intermédiaire du contact avec la paroi 3.

Selon un mode de réalisation, le ou les actionneurs piézo-électriques est (sont) mélangé(s) à la matrice du revêtement anti-glace 13. La présence du ou des actionneurs piézo-électriques dans le revêtement anti-glace 13 permet une mise en oeuvre plus aisée de l'invention.

A titre d'exemple, on peut citer des peintures comportant du titanate zirconate de plomb (« lead zirconate titanate » PZT), des gels ou une structure de lèvre en composite conférant à la lèvre des proriétés piézo-électriques.

Selon un mode de réalisation préféré, au moins une partie de l'ensemble de lèvre (1) selon l'invention est réalisée dans un matériau comportant un composite ou un métal et des nanoparticules apte à rendre la surface de l'ensemble de lèvre anti-glace, à savoir empêchant ou limitant très fortement la formation de couche de glace sur cette surface.

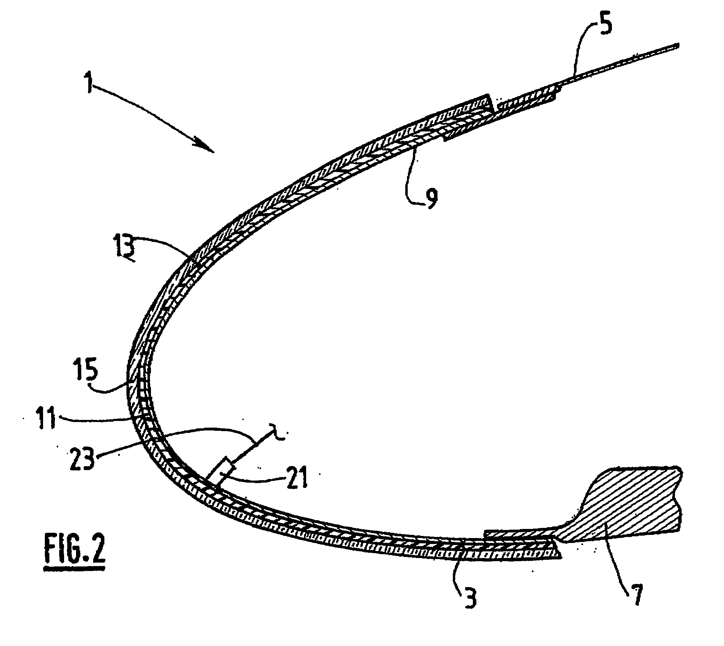

Selon un autre mode de réalisation représenté à la figure 2, au moins un actionneur piézo-électrique 21 est en contact avec la surface interne 9 de l'ensemble de lèvre selon l'invention.

Le nombre d'actionneur plézo-électrique à mettre en contact dépend de la puissance de l'actionneur à faire vibrer la surface externe 11.

Dans le cas où plusieurs actionneurs piézo-électriques sont en contact avec la surface interne 9, ces actionneurs sont selon un mode de réalisation particulier régulièrement répartis.

Selon un autre mode de réalisation représenté à la figure 2, un seul actionneur piézo-électrique 21 est en contact avec la surface interne 9 ce qui permet de réduire l'encombrement au niveau de la surface interne 9.

De préférence, le ou les actionneurs piézo-électriques 21 comporte(nt) un vérin et un dipôle.

Le ou les actionneurs piézo-électriques 21 sont reliés individuellement par l'intermédiaire de moyens d'alimentation électrique, notamment un câble électrique 23 à une source d'énergie électrique non représentée.

Ainsi, il apparaît au vu des deux exemples non limitatifs que les moyens de vibrations n'engendrent pas de discontinuité dans l'aérodynamisme de la lèvre d'entrée d'air. Si ce n'était pas le cas, ce type de discontinuité serait facteur d'une diminution de la performance d'atténuation acoustique et une augmentation de la consommation de carburant.

## Revendications

1. Ensemble de lèvre (1) d'une entrée d'air d'une nacelle de turboréacteur comportant une surface interne (9), une surface externe (11) et des moyens de dégivrage, **caractérisé en ce que** les moyens de dégivrage comportent un revêtement anti-glace (13) enduisant au moins une partie de la surface externe (11), ledit revêtement anti-glace comportant un ou plusieurs actionneurs piézoélectriques dans la matrice dudit revêtement et aptes à faire vibrer la surface externe.

2. Ensemble (1) selon la revendication 1, **caractérisé en ce que** les moyens d'actionnement piézo-électrique comportent au moins un actionneur piézo-électrique (21) et des moyens d'alimentation électrique (23).

3. Ensemble (1) selon l'une quelconque des revendications 1 ou 2, **caractérisé en ce qu'**au moins un actionneur piézo-électrique (21) est en contact avec la surface interne (9).

4. Ensemble (1) selon l'une quelconque des revendications 1 à 3, **caractérisé en ce que** le ou les actionneurs piézo-électriques (21) compode(nt) un vérin et un dipôle.

5. Ensemble (1) selon l'une quelconque des revendications précédentes, **caractérisé en ce que** le revêtement anti-glace (13) est choisi parmi les peintures polyuréthane, fluoropolyuréthane, des résines telles que des résines comportant du polydiméthylsiloxane ou des plastiques comportant du Téflon®.

6. Ensemble (1) selon l'une quelconque des revendications précédentes, **caractérisé en ce qu'**au moins une partie de l'ensemble de lèvre est réalisée dans un matériau comportant un composite ou un métal et des nanoparticules aptes à rendre la surface de l'ensemble de lèvre anti-glace.

7. Ensemble (1) selon l'une quelconque des revendications précédentes.
**caractérisé en ce que** l'épaisseur (e) du revêtement anti-glace (13) est comprise entre 20 µm et 100 µm.

8. Nacelle de turboréacteur comprenant un ensemble de lèvre (1) selon l'une quelconque des revendications précédentes.

## Claims

1. A lip assembly (1) of an air intake of a turbojet engine nacelle comprising an inner surface (9), an outer surface (11), and de-icing means, **characterized in that** the de-icing means comprise an anti-ice coating (13) that coats ant least part of the outer surface (11), said anti-ice coating comprising one or more piezoelectric actuators in the matrix of said coating that are capable of vibrating the outer surface.

2. The assembly (1) according to claim 1, **characterized in that** the piezoelectric actuating means comprise at least one piezoelectric actuator (21) and electric power means (23).

3. The assembly (1) according to any one of claims 1 or 2, **characterized in that** at least one piezoelectric actuator (21) is in contact with the inner surface (9).

4. The assembly (1) according to any one of claims 1 to 3, **characterized in that** the piezoelectric actuator(s) (21) comprise(s) a cylinder and a dipole.

5. The assembly (1) according to any one of the preceding claims, **characterized in** the anti-ice coating (13) is chosen from among polyurethane paints, fluoropolyurethane paints, resins such as resins comprising polydimethylsiloxane or plastics comprising Teflon®.

6. The assembly (1) according to any one of the preceding claims, **characterized in that** at least part of the lip assembly is made from a material comprising a composite or a and nanoparticles capable of making the surface of the lip assembly ice-proof.

7. The assembly (1) according to any one of the preceding claims, **characterized in that** the thickness (e) of the anti-ice coating (13) is comprised between 20 µm and 100 µm.

8. A turbojet engine nacelle comprising a lip assembly (1) according to any one of the preceding claims.

## Patentansprüche

1. Lippengruppe (1) eines Lufteinlasses einer Turbotriebwerksgondel, die eine innere Fläche (9), eine äußere Fläche (11) und Enteisungsmittel aufweist, **dadurch gekennzeichnet, dass** die Enteisungsmittel eine Anti-Eis-Beschichtung (13) aufweisen, die mindestens einen Teil der äußeren Fläche (11) beschichten, wobei die Anti-Eis-Beschichtung (13) einen oder mehrere piezoelektrischen Aktuatoren in der Matrix der Beschichtung (13) aufweist und imstande sind, die äußere Fläche vibrieren zu lassen.

2. Gruppe (1) nach Anspruch 1, **dadurch gekennzeichnet, dass** die piezoelektrischen Aktuatormittel mindestens einen piezoelektrischen Aktuator (21) und elektrische Versorgungsmittel (23) aufweisen.

3. Gruppe (1) nach einem der Ansprüche 1 oder 2, **dadurch gekennzeichnet, dass** mindestens ein piezoelektrischer Aktuator (21) mit der inneren Fläche (9) im Kontakt ist.

4. Gruppe (1) nach einem der Ansprüche 1 bis 3, **dadurch gekennzeichnet, dass** der oder die piezoelektrische/n Aktuator/en (21) eine Winde und einen Dipol umfassvumfassen.

5. Gruppe (1) nach einem der vorangehenden Ansprüche, **dadurch gekennzeichnet**, die Anti-Eis-Beschichtung (13) aus den Polyurethan-, Fluorpolyurethanlacken, Harzen, wie Harzen, die Polydimethylsiloxan enthalten, oder Kunststoffen, die Téflon® ausweisen, ausgewählt ist.

6. Gruppe (1) nach einem der vorangehenden Ansprüche, **dadurch gekennzeichnet, dass** mindestens ein Teil der Lippengruppe aus einem Material hergestellt ist, das einen Verbundstoff oder ein Metall aufweist und Nanopartikel, die imstande sind, die Fläche der Lippengruppe eisabweisend auszurüsten.

7. Gruppe (1) nach einem der vorangehenden Ansprüche, **dadurch gekennzeichnet, dass** die Dicke (e) der Anti-Eis-Beschichtung (13) zwischen 20 µm und 100 µm inklusive ist.

8. Turbotriebwerksgondel, die eine Lippengruppe (1) nach einem der vorangehenden Ansprüche umfasst.
